# EUROPEAN PATENT SPECIFICATION

(11) **EP 4 542 959 B1**
(45) Date of publication and mention of the grant of the patent: **23.09.2026**
(21) Application number: 23929314.5
(22) Date of filing: 30.03.2023
(51) Int. Cl.: H04L 12/413

(54) **MESSAGE PROCESSING METHOD, APPARATUS, AND VEHICLE**
NACHRICHTENVERARBEITUNGSVERFAHREN, -VORRICHTUNG UND -FAHRZEUG
PROCÉDÉ DE TRAITEMENT DE MESSAGE, APPAREIL ET VÉHICULE

(43) Date of publication of application: 23.04.2025
(73) Proprietor: Yinwang Intelligent Technologies Co., Ltd., Shenzhen, Guangdong 518110 (CN)
(72) Inventor: ZHANG, Mingming, Shenzhen, Guangdong 518129 (CN); YAO, Hanbo, Shenzhen, Guangdong 518129 (CN); CHENG, Hao, Shenzhen, Guangdong 518129 (CN); WU, Huanyu, Shenzhen, Guangdong 518129 (CN)
(74) Representative: MERH-IP Matias Erny Reichl Hoffmann Patentanwälte PartG mbB
(86) International application number: PCT/CN2023/085144
(87) International publication number: WO 2024/197717

(56) References cited:
- WO-A1-2022/261822
- CN-A- 102 638 403
- CN-A- 112 152 940
- FR-A1- 3 114 465
- US-A1- 2007 067 518
- US-A1- 2008 101 420
- US-A1- 2014 003 252

## Description

### TECHNICAL FIELD

This application relates to the vehicle-mounted communication field, and in particular, to a packet processing method and apparatus, and a vehicle.

### BACKGROUND

Currently, a vehicle-mounted controller mainly uses a controller area network (controller area network, CAN) bus for communication. As requirements of product functions and intelligence increase, a quantity of CAN packets sent and received by the vehicle-mounted controller is increasing.

In the conventional technology, the vehicle-mounted controller receives a plurality of packets generally in an interrupt manner or a periodic polling manner as a receiver. In this case, a high-priority packet may be impacted by a low-priority packet, for example, the high-priority packet cannot be processed in a timely manner or even lost, which affects execution of some periodic tasks (such as periodic task disorder, packet frame loss occurrence in signal sending and receiving, and sending failure). In severe cases, controller tasks are suspended, and all functions become invalid.
Document US 2008/101420 A1 generally relates to a communication system that has a number of nodes connected to a serial data bus. Nodes communicate with each other by transmitting dominant and recessive bits during bit intervals as taught by the CAN (controller area network) arbitration protocol. According to the CAN arbitration protocol, any dominant bit transmitted during a bit interval causes the bit value received to be a dominant bit regardless of the number of recessive bits being sent. The system is arranged so that two or more nodes each respond to a report query message sent by one of the nodes, with a report message sent simultaneously by each of the nodes. The headers (leading bits) of each of the report messages sent by nodes responding to a report query message are the same, allowing arbitration on a trailing node data field. This results in the message having the numerically largest (or smallest) node data field value to survive arbitration. Thus a number of nodes can be polled with a report query message and will respond by simultaneously sending each node's numerical data value with the largest or smallest of these data values received by the system's nodes.

### SUMMARY

This application provides a packet processing method and apparatus, and a vehicle, so that reliability and flexibility of packet processing can be improved, thereby helping improve vehicle safety. In particular, this application provides a packet processing method, corresponding apparatuses, a packet processing system, a vehicle, and a computer-readable storage medium, having the features of respective independent claims. The dependent claims relate to preferred embodiments.

According to a first aspect, a packet processing method is provided. The method may be performed by a vehicle, or may be performed by a vehicle-mounted terminal such as an in-vehicle infotainment of a vehicle, or may be performed by a vehicle-mounted electronic control unit (electronic control unit, ECU) or the like, or may be performed by a chip or a circuit used in a vehicle. This is not limited in this application.

The method may include: obtaining a first packet, where the first packet corresponds to a first identifier (identifier, ID); determining a priority of the first packet based on the first identifier; and when the first packet corresponds to a first priority, performing interrupt processing on the first packet; or when the first packet corresponds to a second priority, performing periodic polling on the first packet, where the first priority is higher than the second priority.

The interrupt processing means that when receiving an interrupt or abnormal signal, a central processing unit (central processing unit, CPU) suspends execution of a program that is being executed, jumps to a related processing program responsible for processing the signal through a specific mechanism, and jumps back to a program that is interrupted after processing of the signal completes. Based on this, the performing interrupt processing on the first packet means that when receiving a signal for performing interrupt processing on the first packet, the CPU suspends execution of the program that is being executed, preferentially processes the first packet, and returns to the program that is interrupted after processing the first packet.

The periodic polling means that the CPU sends a query based on a preset period, and sequentially queries whether each peripheral device needs a service of the CPU. The preset period may be, for example, 100 milliseconds, 300 milliseconds, or 500 milliseconds. This is not limited in this application. Based on this, the performing periodic polling on the first packet means that the CPU processes the first packet in a query manner based on the preset period.

Based on the foregoing solution, during packet processing, a priority of a packet may be first determined based on an identifier of the packet, and then a manner of processing the packet is determined based on the priority of the packet. For example, when the priority of the packet is high, interrupt processing is preferentially performed on the packet; and when the priority of the packet is low, periodic polling is performed on the packet. Therefore, impact on a high-priority packet by processing of a low-priority packet can be avoided, and real-time processing of the high-priority packet can be ensured. Reliability and flexibility of packet processing can be further improved, thereby helping improve vehicle safety.

For example, the first packet may be a CAN packet, or may be another packet. This is not limited in this embodiment of this application. For ease of description, the following uses the CAN packet as an example for description.

The CAN packet is used as an example. A priority of the CAN packet may be determined by using an identifier ID of the CAN packet. It should be noted that, there are usually two level states on a CAN bus, namely, a dominant level and a recessive level. The dominant level is specified as logic 0, and the recessive level is specified as logic 1. A priority of the dominant level is higher than that of the recessive level. An 11-bit CAN ID is used as an example. The 11-bit CAN ID includes 11 bytes, the 11 bytes are respectively a byte 1 to a byte 11 from left to right, and each byte is a value 0 or 1. Usually, when priorities of different IDs are determined, byte values of different IDs may be compared bit by bit from left to right. When values at a byte are different, the comparison ends. An ID with a dominant level wins, and is preferentially sent. A byte number is recorded, and a priority of the ID may be represented by using the byte number. For example, for an ID 1, an ID 2, and an ID 3, if a value of the ID 1 at a byte 1 is different from that of another ID, and the byte 1 of the ID 1 is a dominant bit, it may be considered that a priority of the ID 1 is higher than a priority of the another ID, and the priority of the ID 1 is represented by using "ID 1=byte 1". Then, bytes of the ID 2 and the ID 3 are compared. If a value of the ID 2 at a byte 5 is different from that of the ID 3, and the byte 5 of the ID 2 is a dominant bit, a priority of the ID 2 may be represented by using "ID 2=byte 5". In conclusion, the priority of the ID may be represented by using "ID=byte x". Usually, a smaller x indicates a higher priority of the ID. For example, a priority of a CAN packet of "ID=byte 1" is higher than a priority of a CAN packet of "ID=byte 2", and so on.

Based on the foregoing descriptions, in an example, packets of "ID=byte 1" to "ID=byte 5" may correspond to the first priority, and packets of "ID=byte 6" to "ID=byte 11" may correspond to the second priority.

In a possible implementation, a correspondence between a packet identifier and a priority may be further pre-customized based on packet content, and the correspondence between the packet identifier and the priority may be stored in a mapping table. For example, a packet that carries a control instruction such as a vehicle control instruction may be preset to the first priority, and the correspondence between the packet identifier and the priority is stored in the mapping table. For another example, a packet that carries entertainment content such as an audio/video stream may be preset to the second priority, and the correspondence between an identifier of the packet and the priority is stored in the mapping table. In this way, during actual operation, after the packet is obtained, a corresponding priority may be directly determined by searching in the mapping table based on the packet identifier. The high-priority packet or a packet affecting vehicle safety is preferentially processed. This helps ensure real-time processing of the high-priority packet or the packet affecting vehicle safety. Periodic polling is performed on a service packet such as a low priority or the audio/video stream, so that processing performance can be improved, and impact of a high-frequency interrupt on performance of a packet processing system can be avoided.

With reference to the first aspect, in some implementations of the first aspect, the performing interrupt processing on the first packet includes: when the first priority is a third priority, performing direct interrupt processing on the first packet; or when the first priority is a fourth priority, performing interrupt processing on the first packet based on a first queue, where the first queue is a queue whose priority is higher than a first threshold in at least two queues, and the third priority is higher than the fourth priority.

Based on the foregoing solution, when interrupt processing is performed on the packet, an interrupt processing manner for the packet may be further determined based on the priority of the packet. For example, when the priority of the packet is higher, interrupt processing is directly performed on the packet; and when the priority of the packet is generally high, interrupt processing is performed on the packet based on the first queue, so that real-time processing of a packet with a higher priority can be ensured while ensuring that processing of a packet with a generally high priority is slightly affected, and reliability and flexibility of packet processing can be improved.

The foregoing queue may be understood as a linear table. The linear table allows a delete operation to be performed at a front end (namely, a queue head) of the table, and an insert operation to be performed at a back end (namely, a queue tail) of the table. Based on this, the first queue may be understood as a sorting table of packets, and the packets are usually added to the first queue from a back end of the sorting table, but the packets are sequentially processed from a front end of the sorting table. The performing interrupt processing on the first packet based on the first queue may be understood as: sequentially performing interrupt processing on the packets based on a sorting order of the packets in the first queue until a turn of the first packet.

That the first queue is a queue whose priority is higher than a first threshold in at least two queues may also be described as follows: The first queue is a queue with a high priority in the at least two queues. In a possible implementation, a priority of each of the at least two queues may be preset. For example, a priority of a queue 1 is set to 1, a priority of a queue 2 is set to 2, and the first threshold is set to 1.5. Based on this, it may be determined that the first queue is the queue 2.

With reference to the first aspect, in some implementations of the first aspect, the performing periodic polling on the first packet includes: performing periodic polling on the first packet based on a second queue, where the second queue is a queue whose priority is lower than a second threshold in the at least two queues.

Based on the foregoing solution, when periodic polling is performed on the packet, periodic polling may be further performed on the first packet based on the second queue, to improve an order of packet processing, and help improve the reliability and the flexibility of packet processing.

The performing periodic polling on the first packet based on the second queue may be understood as: sequentially performing periodic polling on packets based on a sorting order of packets in the second queue until the turn of the first packet.

That the second queue is a queue whose priority is lower than a second threshold in the at least two queues may also be described as follows: The second queue is a queue with a low priority in the at least two queues. In a possible implementation, the priority of each of the at least two queues may be preset. For example, the priority of the queue 1 is set to 1, the priority of the queue 2 is set to 2, and the second threshold is set to 1.3. Based on this, it may be determined that the second queue is the queue 1.

In a possible implementation, a specific queue in the at least two queues is the first queue or the second queue may not be determined based on the priority of the queue, but by distinguishing different queues in a manner of presetting identities for the queues, so that in practice, a specific queue in the at least two queues is the first queue (or the second queue) may be determined based on an identifier corresponding to the first queue (or the second queue). For example, the queue 1 may be set to correspond to the identifier 1, and the queue 2 may be set to correspond to the identifier 2. In this case, when the first queue corresponds to the identifier 2, it may be determined that the first queue is the queue 2.

With reference to the first aspect, in some implementations of the first aspect, the method further includes: determining, based on the first identifier, that the first packet is associated with a first processing unit; obtaining a second packet, where the second packet includes a second identifier; determining, based on the second identifier, that the second packet is associated with a second processing unit; and processing the first packet and the second packet respectively based on the first processing unit and the second processing unit.

In a conventional solution, the packet is usually received by using one target processing unit, and another processing unit migrates the packet from the target processing unit. As a result, a large amount of memory and CPU resources of the target processing unit are occupied, processing pressure is high, and processing efficiency is low.

When the packet is processed based on the foregoing solution of this application, different processing units can be first determined based on different packet identities, and then different packets are processed based on the different processing units, so that use of CPU resources of the different processing units can be balanced, overload of a single processing unit is avoided, and overall resource utilization and packet processing efficiency are improved.

In a possible implementation, a correspondence between the packet identifier and the processing unit may be preset. For example, the correspondence between the packet identifier and the processing unit is set in a manner of the mapping table. In this way, during actual operation, after the packet is obtained, a corresponding processing unit may be determined by searching in the mapping table based on the packet identifier.

Optionally, different packet identities may be preset to correspond to different processing units. For example, three different packet identities (the ID 1, the ID 2, and the ID 3) may be preset to correspond to three different processing units (a processing unit 1, a processing unit 2, and a processing unit 3) respectively. For example, the ID 1 corresponds to the processing unit 1, the ID 2 corresponds to the processing unit 2, and the ID 3 corresponds to the processing unit 3. Alternatively, N packet identities may be preset to correspond to M processing units, where N is greater than M. For example, three packet identities (the ID 1, the ID 2, and the ID 3) correspond to two processing units (a processing unit 1 and a processing unit 2). In this case, some processing units need to process one packet, and some processing units need to process a plurality of packets. For example, the ID 1 and the ID 2 correspond to the processing unit 1, and the ID 3 corresponds to the processing unit 2. Alternatively, one packet identifier may be preset to correspond to a plurality of different processing units. For example, one packet identifier ID 1 is preset to correspond to three different processing units (a processing unit 1, a processing unit 2, and a processing unit 3). In this case, any processing unit may be selected to process the packet (for example, the processing unit 1 is selected), or the packet may be processed by a plurality of processing units simultaneously. It should be understood that, during actual operation, the correspondence between the processing unit and the packet identifier is flexible. This is not specifically limited in this application.

With reference to the first aspect, in some implementations of the first aspect, the method further includes: determining, based on the first identifier, whether the first packet needs to be routed and forwarded; and when it is determined that the first packet does not need to be routed and forwarded, performing interrupt processing or periodic polling on the first packet.

With reference to the first aspect, in some implementations of the first aspect, the method further includes: when it is determined that the first packet needs to be routed and forwarded, performing routing and forwarding on the first packet.

Based on the foregoing solution, before interrupt processing or periodic polling is performed on the packet, whether the packet needs to be routed and forwarded may be first determined based on the identifier of the packet. When the packet does not need to be routed and forwarded, interrupt processing or periodic polling is performed on the packet. When the packet needs to be routed and forwarded, routing and forwarding are directly performed on the packet, to reduce packet processing steps, reduce a waiting time and a processing time for forwarding of the packet, and improve packet processing efficiency.

In a possible implementation, a correspondence between the packet identifier and whether to perform routing and forwarding may be preset. For example, a correspondence between a plurality of packet identities and whether to perform routing and forwarding is set by using the manner of the mapping table. In this way, during actual operation, after the packet is obtained, whether the packet needs to be routed and forwarded may be determined by searching in the mapping table based on the packet identifier.

With reference to the first aspect, in some implementations of the first aspect, the performing routing and forwarding on the first packet includes: when the first packet corresponds to a fifth priority, performing real-time forwarding on the first packet; or when the first packet corresponds to a sixth priority, performing periodic polling and forwarding on the first packet, where the fifth priority is higher than the sixth priority.

Based on the foregoing solution, when routing and forwarding need to be performed on the packet, a manner of routing and forwarding the packet may be determined based on the priority of the packet. For example, when the priority of the packet is high, real-time forwarding is performed on the packet; and when the priority of the packet is low, periodic polling and forwarding is performed on the packet. Therefore, real-time forwarding of the high-priority packet can be ensured, and the reliability and the flexibility of packet forwarding can be improved.

According to a second aspect, a packet processing apparatus is provided. The apparatus may include an obtaining module and a processing module. The obtaining module is configured to obtain a first packet, and the first packet corresponds to a first identifier. The processing module is configured to: determine a priority of the first packet based on the first identifier; and when the first packet corresponds to a first priority, perform interrupt processing on the first packet; or when the first packet corresponds to a second priority, perform periodic polling on the first packet, where the first priority is higher than the second priority.

With reference to the second aspect, in some implementations of the second aspect, the processing module is further configured to: when the first priority is a third priority, directly perform interrupt processing on the first packet; or when the first priority is a fourth priority, perform interrupt processing on the first packet based on a first queue, where the first queue is a queue whose priority is higher than a first threshold in at least two queues, and the third priority is higher than the fourth priority.

With reference to the second aspect, in some implementations of the second aspect, the processing module is further configured to perform periodic polling on the first packet based on a second queue, where the second queue is a queue whose priority is lower than a second threshold in the at least two queues.

With reference to the second aspect, in some implementations of the second aspect, the obtaining module is further configured to obtain a second packet, where the second packet includes a second identifier; and the processing module is further configured to: determine, based on the first identifier, that the first packet is associated with a first processing unit; determine, based on the second identifier, that the second packet is associated with a second processing unit; and process the first packet and the second packet respectively based on the first processing unit and the second processing unit.

With reference to the second aspect, in some implementations of the second aspect, the processing module is further configured to: determine, based on the first identifier, whether the first packet needs to be routed and forwarded; and when it is determined that the first packet does not need to be routed and forwarded, perform interrupt processing or periodic polling on the first packet.

With reference to the second aspect, in some implementations of the second aspect, the processing module is further configured to: when it is determined that the first packet needs to be routed and forwarded, perform routing and forwarding on the first packet.

With reference to the second aspect, in some implementations of the second aspect, the processing module is further configured to: when the first packet corresponds to a fifth priority, perform real-time forwarding on the first packet; or when the first packet corresponds to a sixth priority, perform periodic polling and forwarding on the first packet, where the fifth priority is higher than the sixth priority.

According to a third aspect, a packet processing apparatus is provided. The apparatus includes: A memory is configured to store a computer program; and a processor is configured to execute the computer program stored in the memory, so that the apparatus is enabled to perform the method in any possible implementation of the first aspect.

According to a fourth aspect, a packet processing system is provided. The packet processing system includes: A packet transceiver is configured to receive a first packet; and the apparatus in any possible implementation of the second aspect is configured to obtain the first packet from the packet transceiver and process the first packet.

According to a fifth aspect, a vehicle is provided. The vehicle may include the apparatus in any possible implementation of the second aspect, or include the apparatus in the third aspect, or the system in the fourth aspect.

According to a sixth aspect, a computer program product is provided. The computer program product includes computer program code. When the computer program code is run on a computer, the computer is enabled to perform the method in any possible implementation of the first aspect.

It should be noted that all or some of the computer program code may be stored in a first storage medium. The first storage medium may be encapsulated together with a processor, or may be encapsulated separately from a processor. This is not specifically limited in this embodiment of this application.

According to a seventh aspect, a computer-readable storage medium is provided. The computer-readable storage medium stores a computer program; and when the computer program is executed by a computer, the method in any possible implementation of the first aspect is implemented.

According to an eighth aspect, a chip is provided. The chip includes a processor, configured to invoke a computer program or computer instructions stored in a memory, so that the processor performs the method in any possible implementation of the first aspect.

With reference to the eighth aspect, in a possible implementation, the processor is coupled to the memory by using an interface.

With reference to the eighth aspect, in a possible implementation, the chip further includes a memory. The memory stores a computer program or computer instructions.

### BRIEF DESCRIPTION OF DRAWINGS

FIG. 1 is a schematic flowchart of a packet processing method according to an embodiment of this application;
FIG. 2 is a schematic flowchart of another packet processing method according to an embodiment of this application;
FIG. 3 is a schematic diagram of a system architecture of packet processing according to an embodiment of this application;
FIG. 4 is a schematic diagram of another system architecture of packet processing according to an embodiment of this application;
FIG. 5 is a schematic block diagram of a packet processing apparatus according to an embodiment of this application; and
FIG. 6 is a schematic block diagram of another packet processing apparatus according to an embodiment of this application.

### DESCRIPTION OF EMBODIMENTS

In descriptions of embodiments of this application, unless otherwise specified, "/" means "or". For example, A/B may represent A or B. In this specification, "and/or" describes only an association relationship between associated objects, and represents that three relationships may exist. For example, A and/or B may represent the following three cases. Only A exists, both A and B exist, and only B exists.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In embodiments of this application, prefix words such as "first" and "second" are used only to distinguish between different described objects, and do not limit a location, a sequence, a priority, a quantity, content, or the like of the described objects. In embodiments of this application, use of a prefix word, such as an ordinal number, used to distinguish between described objects does not constitute a limitation on the described objects. For a description of the described objects, refer to the description of the context in the claims or embodiments. The use of such a prefix word should not constitute an unnecessary limitation.

The solutions of this application may be applied to a vehicle (sometimes car for short). The vehicle may be understood as a vehicle in a broad sense. The vehicle may be a transportation means (for example, an automobile, a truck, a motorcycle, an airplane, a train, or a ship), an industrial vehicle (for example, a pallet truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in embodiments of this application.

For example, the solutions of this application may be applied to a vehicle-mounted control module (for example, a vehicle dynamics control (vehicle dynamics control, VDC), a vehicle controller (vehicle control unit, VCU), or a vehicle domain controller (domain control unit, DCU)), a vehicle-mounted electronic control unit (electronic control unit, ECU), a vehicle-mounted micro control unit (microcontroller unit, MCU), or a vehicle-mounted terminal such as a vehicle-mounted infotainment or a chip or a circuit in the vehicle. This is not limited in this application.

Currently, information exchange between the vehicle-mounted controller and a sensor (such as a lidar, a millimeter-wave radar, and an ultrasonic radar) on the vehicle is implemented in a CAN bus communication manner. With intelligent development of vehicles, a quantity of CAN packets received and sent by the vehicle-mounted controller is increasing.

In the conventional technology, the vehicle-mounted controller generally receives a plurality of packets in an interrupt manner or a periodic polling manner, without distinguishing priorities of packets. In this case, a high-priority packet may be impacted by a low-priority packet, for example, the high-priority packet cannot be processed in a timely manner. In addition, surging packets may cause overflow of high-priority packets, which affects execution of some periodic tasks (such as periodic task disorder, packet frame loss occurrence in signal receiving and sending, and sending failure). In severe cases, controller tasks are suspended, and all functions become invalid.

Based on this, during packet processing, the solutions of this application first determine a priority of a packet based on an identifier of the packet, and then a manner of processing the packet is determined based on the priority of the packet. For example, when the priority of the packet is high, interrupt processing is preferentially performed on the packet; and when the priority of the packet is low, periodic polling is performed on the packet. Therefore, impact on the high-priority packet by processing of the low-priority packet can be avoided, and real-time processing of the high-priority packet can be ensured. Reliability and flexibility of packet processing can be further improved, thereby helping improve vehicle safety.

The following describes technical solutions in embodiments of this application with reference to accompanying drawings.

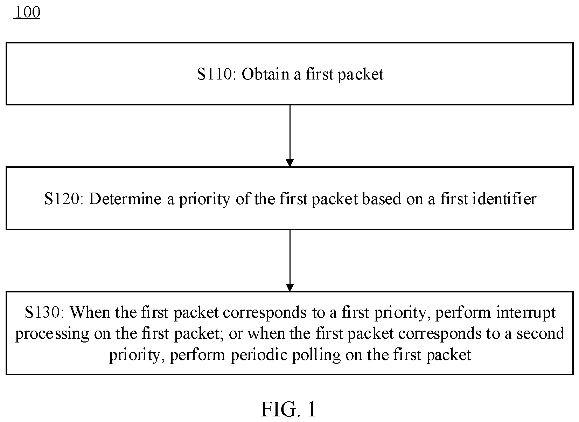

FIG. 1 is a schematic flowchart of a packet processing method according to an embodiment of this application. Steps or operations of the packet processing method shown in FIG. 1 are merely examples for description. In this embodiment of this application, other operations or variations of the operations in FIG. 1 may be further performed. The method 100 includes the following steps.

S110: Obtain a first packet, where the first packet corresponds to a first identifier (identifier, ID).

For example, the first packet may be a CAN packet, or may be another packet. This is not limited in this embodiment of this application. For ease of description, the following uses the CAN packet as an example for description.

The obtaining the first packet may be obtaining the first packet from a CAN transceiver.

S120: Determine a priority of the first packet based on the first identifier.

The CAN packet is used as an example. A priority of the CAN packet may be determined by using an identifier ID of the CAN packet. It should be noted that, there are usually two level states on a CAN bus, namely, a dominant level and a recessive level. The dominant level is specified as logic 0, and the recessive level is specified as logic 1. A priority of the dominant level is higher than that of the recessive level. An 11-bit CAN ID is used as an example. The 11-bit CAN ID includes 11 bytes, the 11 bytes are respectively a byte 1 to a byte 11 from left to right, and each byte is a value 0 or 1. Usually, when priorities of different IDs are determined, byte values of different IDs may be compared bit by bit from left to right. When values at a byte are different, the comparison ends. An ID with a dominant level wins, and is preferentially sent. A byte number is recorded, and a priority of the ID may be represented by using the byte number. For example, for an ID 1, an ID 2, and an ID 3, if a value of the ID 1 at a byte 1 is different from that of another ID, and the byte 1 of the ID 1 is a dominant bit, it may be considered that a priority of the ID 1 is higher than a priority of the another ID, and the priority of the ID 1 is represented by using "ID 1=byte 1". Then, bytes of the ID 2 and the ID 3 are compared. If a value of the ID 2 at a byte 5 is different from that of the ID 3, and the byte 5 of the ID 2 is a dominant bit, a priority of the ID 2 may be represented by using "ID 2=byte 5". In conclusion, the priority of the ID may be represented by using "ID=byte x". Usually, a smaller x indicates a higher priority of the ID. For example, a priority of a CAN packet of "ID=byte 1" is higher than a priority of a CAN packet of "ID=byte 2", and so on.

Based on the foregoing descriptions, in an example, packets of "ID=byte 1" to "ID=byte 5" may correspond to a first priority, and packets of "ID=byte 6" to "ID=byte 11" may correspond to a second priority. Further, packets of "ID=byte 1" and "ID=byte 2" may correspond to a third priority, and packets of "ID=byte 3" to "ID=byte 5" may correspond to a fourth priority.

In a possible implementation, a correspondence between a packet identifier and a priority may be further pre-customized based on packet content, and the correspondence between an identifier of the packet and the priority may be stored in a mapping table. For example, a packet that carries a control instruction such as a vehicle control instruction may be preset to the first priority, and the correspondence between an identifier of the packet and the priority is stored in the mapping table. For another example, a packet that carries entertainment content such as an audio/video stream may be preset to the second priority, and the correspondence between an identifier of the packet and the priority is stored in the mapping table. In this way, during actual operation, after the packet is obtained, a corresponding priority may be directly determined by searching in the mapping table based on the packet identifier. A high-priority packet or a packet affecting vehicle safety is preferentially processed. This helps ensure real-time processing of the high-priority packet or the packet affecting vehicle safety. Periodic polling is performed on a service packet such as a low priority or the audio/video stream, so that processing performance can be improved, and impact of a high-frequency interrupt on performance of a packet processing system can be avoided.

S130: When the first packet corresponds to the first priority, perform interrupt processing on the first packet; or when the first packet corresponds to the second priority, perform periodic polling on the first packet, where the first priority is higher than the second priority.

The interrupt processing means that when receiving an interrupt or abnormal signal, a CPU suspends execution of a program that is being executed, jumps to a related processing program responsible for processing the signal through a specific mechanism, and jumps back to a program that is interrupted after processing of the signal completes. Based on this, the performing interrupt processing on the first packet means that when receiving a signal for performing interrupt processing on the first packet, the CPU suspends execution of the program that is being executed, preferentially processes the first packet, and returns to the program that is interrupted after processing the first packet.

In a possible implementation, when the first priority is the third priority, interrupt processing may be directly performed on the first packet.

In another possible implementation, when the first priority is the fourth priority, interrupt processing may be performed on the first packet based on a first queue, where the first queue is a queue whose priority is higher than a first threshold in at least two queues, and the third priority is higher than the fourth priority.

The foregoing queue may be understood as a linear table. The linear table allows a delete operation to be performed at a front end (namely, a queue head) of the table, and an insert operation to be performed at a back end (namely, a queue tail) of the table. Based on this, the first queue may be understood as a sorting table of packets, and the packets are usually added to the first queue from a back end of the sorting table, but the packets are sequentially processed from a front end of the sorting table. The performing interrupt processing on the first packet based on the first queue may be understood as: sequentially performing interrupt processing on the packets based on a sorting order of the packets in the first queue until a turn of the first packet.

That the first queue is a queue whose priority is higher than a first threshold in at least two queues may also be described as follows: The first queue is a queue with a high priority in the at least two queues. In a possible implementation, a priority of each of the at least two queues may be preset. For example, a priority of a queue 1 is set to 1, a priority of a queue 2 is set to 2, and the first threshold is set to 1.5. Based on this, it may be determined that the first queue is the queue 2.

Based on the foregoing solution, when interrupt processing is performed on the packet, an interrupt processing manner for the packet may be further determined based on the priority of the packet. For example, when the priority of the packet is higher, interrupt processing is directly performed on the packet; or when the priority of the packet is generally high, interrupt processing is performed on the packet based on the first queue, so that real-time processing of a packet with a higher priority can be ensured while ensuring that processing of a packet with a generally high priority is slightly affected, and reliability and flexibility of packet processing can be improved.

The periodic polling means that the CPU sends a query based on a preset period, and sequentially queries whether each peripheral device needs a service of the CPU. The preset period may be, for example, 100 milliseconds, 300 milliseconds, or 500 milliseconds. This is not limited in this application. Based on this, the performing periodic polling on the first packet means that the CPU processes the first packet in a query manner based on the preset period.

In a possible implementation, periodic polling may be performed on the first packet based on a second queue, where the second queue is a queue whose priority is lower than a second threshold in the at least two queues.

The performing periodic polling on the first packet based on the second queue may be understood as: sequentially performing periodic polling on packets based on a sorting order of packets in the second queue until the turn of the first packet.

That the second queue is a queue whose priority is lower than a second threshold in the at least two queues may also be described as follows: The second queue is a queue with a low priority in the at least two queues. In a possible implementation, the priority of each of the at least two queues may be preset. For example, the priority of the queue 1 is set to 1, the priority of the queue 2 is set to 2, and the second threshold is set to 1.3. Based on this, it may be determined that the second queue is the queue 1.

In a possible implementation, a specific queue in the at least two queues is the first queue or the second queue may not be determined based on the priority of the queue, but by distinguishing different queues in a manner of presetting identities for the queues, so that in practice, a specific queue in the at least two queues is the first queue (or the second queue) may be determined based on an identifier corresponding to the first queue (or the second queue). For example, the queue 1 may be set to correspond to the identifier 1, and the queue 2 may be set to correspond to the identifier 2. In this case, when the first queue corresponds to the identifier 2, it may be determined that the first queue is the queue 2.

Based on the foregoing solution, when periodic polling is performed on the packet, periodic polling may be further performed on the first packet based on the second queue, to improve an order of packet processing, and help improve the reliability and the flexibility of packet processing.

In a possible implementation, the method 100 may further include: determining, based on the first identifier, that the first packet is associated with a first processing unit; obtaining a second packet, where the second packet includes a second identifier; determining, based on the second identifier, that the second packet is associated with a second processing unit; and processing the first packet and the second packet respectively based on the first processing unit and the second processing unit.

In a conventional solution, the packet is usually received by using one target processing unit, and another processing unit migrates the packet from the target processing unit. As a result, a large amount of memory and CPU resources of the target processing unit are occupied, processing pressure is high, and processing efficiency is low. Based on this, during packet processing in this application, different processing units can be first determined based on different packet identities, and then different packets are processed based on the different processing units, so that use of CPU resources of the different processing units can be balanced, overload of a single processing unit is avoided, and overall resource utilization and packet processing efficiency are improved.

In a possible implementation, a correspondence between the packet identifier and the processing unit may be preset. For example, the correspondence between the packet identifier and the processing unit is set in a manner of the mapping table. In this way, during actual operation, after the packet is obtained, a corresponding processing unit may be determined by searching in the mapping table based on the packet identifier.

Optionally, different packet identities may be preset to correspond to different processing units. For example, three different packet identities (the ID 1, the ID 2, and the ID 3) may be preset to correspond to three different processing units (a processing unit 1, a processing unit 2, and a processing unit 3) respectively. For example, the ID 1 corresponds to the processing unit 1, the ID 2 corresponds to the processing unit 2, and the ID 3 corresponds to the processing unit 3. Alternatively, N packet identities may be preset to correspond to M processing units, where N is greater than M. For example, three packet identities (the ID 1, the ID 2, and the ID 3) correspond to two processing units (a processing unit 1 and a processing unit 2). In this case, some processing units need to process one packet, and some processing units need to process a plurality of packets. For example, the ID 1 and the ID 2 correspond to the processing unit 1, and the ID 3 corresponds to the processing unit 2. Alternatively, one packet identifier may be preset to correspond to a plurality of different processing units. For example, one packet identifier ID 1 is preset to correspond to three different processing units (a processing unit 1, a processing unit 2, and a processing unit 3). In this case, any processing unit may be selected to process the packet (for example, the processing unit 1 is selected), or the packet may be processed by a plurality of processing units simultaneously. It should be understood that, during actual operation, the correspondence between the processing unit and the packet identifier is flexible. This is not specifically limited in this application.

In a possible implementation, before step S120 is performed, whether the first packet needs to be routed and forwarded may be first determined based on the first identifier. When it is determined that the first packet does not need to be routed and forwarded, interrupt processing or periodic polling is performed on the first packet. When it is determined that the first packet needs to be routed and forwarded, routing and forwarding are performed on the first packet.

Based on the foregoing solution, before interrupt processing or periodic polling is performed on the packet, whether the packet needs to be routed and forwarded may be first determined based on the identifier of the packet. When the packet does not need to be routed and forwarded, interrupt processing or periodic polling is performed on the packet. When the packet needs to be routed and forwarded, routing and forwarding are directly performed on the packet, to reduce packet processing steps, reduce a waiting time and a processing time for forwarding of the packet, and improve packet processing efficiency.

In a possible implementation, a correspondence between the packet identifier and whether to perform routing and forwarding may be preset. For example, a correspondence between a plurality of packet identities and whether to perform routing and forwarding is set by using the manner of the mapping table. In this way, during actual operation, after the packet is obtained, whether the packet needs to be routed and forwarded may be determined by searching in the mapping table based on the packet identifier.

Optionally, when the first packet corresponds to a fifth priority, real-time forwarding is performed on the first packet; or when the first packet corresponds to a sixth priority, periodic polling and forwarding is performed on the first packet, where the fifth priority is higher than the sixth priority. For example, packets of "ID=byte 1" to "ID=byte 5" may correspond to the fifth priority, and packets of "ID=byte 6" to "ID=byte 11" may correspond to the sixth priority.

Based on the foregoing solution, when routing and forwarding need to be performed on the packet, a manner of routing and forwarding the packet may be determined based on the priority of the packet. For example, when the priority of the packet is high, real-time forwarding is performed on the packet; and when the priority of the packet is low, periodic polling and forwarding is performed on the packet. Therefore, real-time forwarding of the high-priority packet can be ensured, and the reliability and the flexibility of packet forwarding can be improved.

Optionally, when routing and forwarding are performed on the first packet, the first packet may be first sent to a third queue. The third queue may include a plurality of packets on which routing and forwarding need to be performed. The third queue may also be understood as a routing and forwarding buffer queue. This is not limited. For other descriptions of the third queue, refer to the foregoing descriptions of the first queue and the second queue. Details are not described again. When it is a turn to forward the first packet based on an order of the third queue, it may be further determined, based on the priority corresponding to the first packet, whether to perform real-time forwarding or periodic polling and forwarding on the first packet.

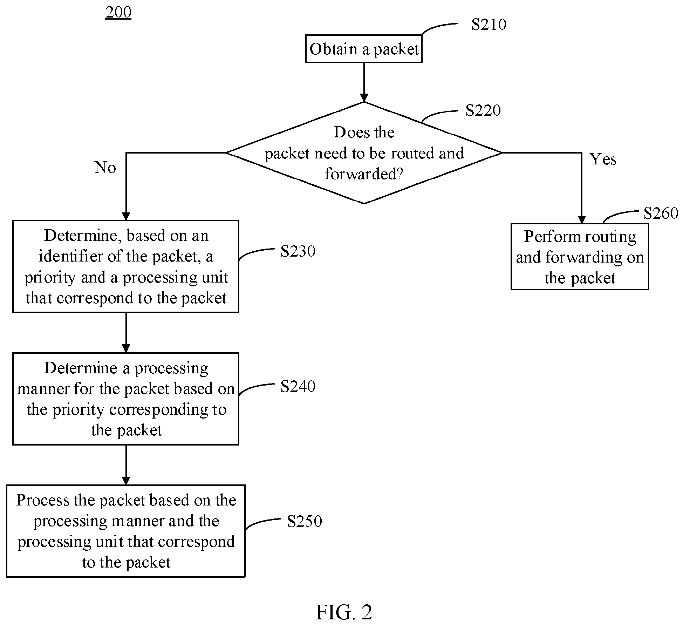

In an example, FIG. 2 is a schematic flowchart of another packet processing method according to an embodiment of this application. It should be understood that steps or operations in the packet processing method 200 shown in FIG. 2 are merely examples for description. In this embodiment of this application, other operations or variations of the operations in FIG. 2 may be further performed. The following describes the steps of the method 200.

S210: Obtain a packet.

S220: Determine whether the packet needs to be routed and forwarded. For a specific determining manner, refer to the foregoing description. Details are not described again.

When it is determined that the packet does not need to be routed and forwarded, steps S230 to S250 are performed; or when it is determined that the packet needs to be routed and forwarded, step S260 is performed, that is, perform routing and forwarding on the packet.

S230: Determine, based on an identifier of the packet, a priority and a processing unit that correspond to the packet. For a specific determining manner, refer to the foregoing description. Details are not described again.

S240: Determine a processing manner for the packet based on the priority corresponding to the packet.

For example, it may be determined, based on the priority corresponding to the packet, whether to perform interrupt processing or periodic polling on the packet.

In an example, when the packet corresponds to a first priority, it may be determined to perform interrupt processing on the packet.

In another example, when the packet corresponds to a second priority, it may be determined to perform periodic polling on the packet; or it may be determined to perform periodic polling on the packet based on a second queue.

In still another example, when the packet corresponds to a third priority, it may be determined to directly perform interrupt processing on the packet.

In yet another example, when the packet corresponds to a fourth priority, it may be determined to perform interrupt processing on the packet based on a first queue.

S250: Process the packet based on the processing manner and the processing unit that correspond to the packet.

In an example, when the processing manner corresponding to the packet is interrupt processing, and the corresponding processing unit is a first processing unit, interrupt processing may be performed on the packet based on the first processing unit.

In another example, when the processing manner corresponding to the packet is periodic polling, and the corresponding processing unit is a second processing unit, periodic polling may be performed on the packet based on the second processing unit.

In still another example, when the processing manner corresponding to the packet is directly performing interrupt processing, and the corresponding processing unit is a third processing unit, interrupt processing may be directly performed on the packet based on the third processing unit.

In yet another example, when the processing manner corresponding to the packet is performing interrupt processing on the packet based on the first queue, and the corresponding processing unit is a fourth processing unit, interrupt processing may be performed on the packet based on the fourth processing unit and the first queue.

S260: Perform routing and forwarding on the packet.

When routing and forwarding are performed on the packet, the packet may be first sent to a third queue, and then routing and forwarding are performed on the packet based on the third queue. When it is a turn to forward the packet based on an order of the third queue, it may be further determined, based on the priority corresponding to the packet, whether to perform real-time forwarding or periodic polling and forwarding on the packet.

In an example, when the packet corresponds to a fifth priority, it may be determined to perform real-time forwarding on the packet.

In another example, when the packet corresponds to a sixth priority, it may be determined to perform periodic polling and forwarding on the packet.

It should be further noted that, for other descriptions of the foregoing steps and descriptions of beneficial effects, refer to the foregoing descriptions. Details are not described again.

Optionally, in a possible implementation, the steps in the foregoing method 100 or 200 may be implemented in a manner of software coding. A running or bearing body of the steps may include but is not limited to a hardware chip, a board, or a product that integrates functions of the foregoing methods, for example, an MCU, a microprocessor (micro-processor unit, MPU), a system on chip (system on chip, SoC), a field programmable gate array (field programmable gate array, FPGA), a digital signal processor (digital signal processor, DSP), a packet transceiver module, a driver chip, and a power chip. Alternatively, a software program integrating functions of the foregoing methods may include but is not limited to implementation by using programming languages such as C, C++, JAVA, and python.

In another possible implementation, the steps in the method 100 or 200 may be implemented by using a combination of software and hardware. For example, a processing process may be accelerated in a manner of chip hardening, and may include but is not limited to implementing chip hardening by using a circuit or a module designed by using a combination of digital or logical gates. A related parameter (such as a CAN ID, a processing manner, a processing unit number, a packet period, a length, a buffer size, a packet quantity, and a rate) may be implemented by using a register configuration or software coding, to improve a processing speed.

In still another possible implementation, some steps in the method 100 or 200 may be implemented through software coding, and the other steps may be implemented through the combination of software and hardware. This is not limited in this application.

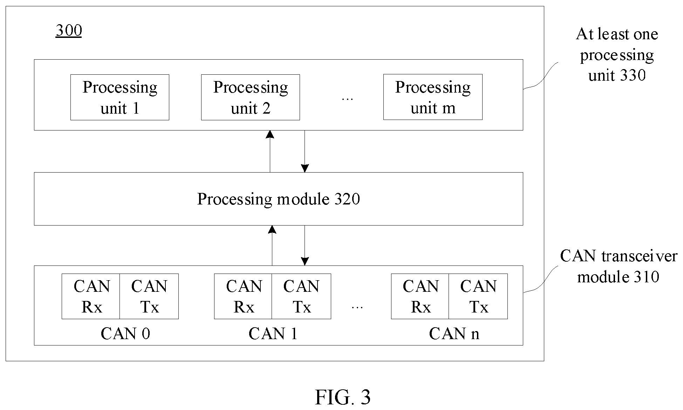

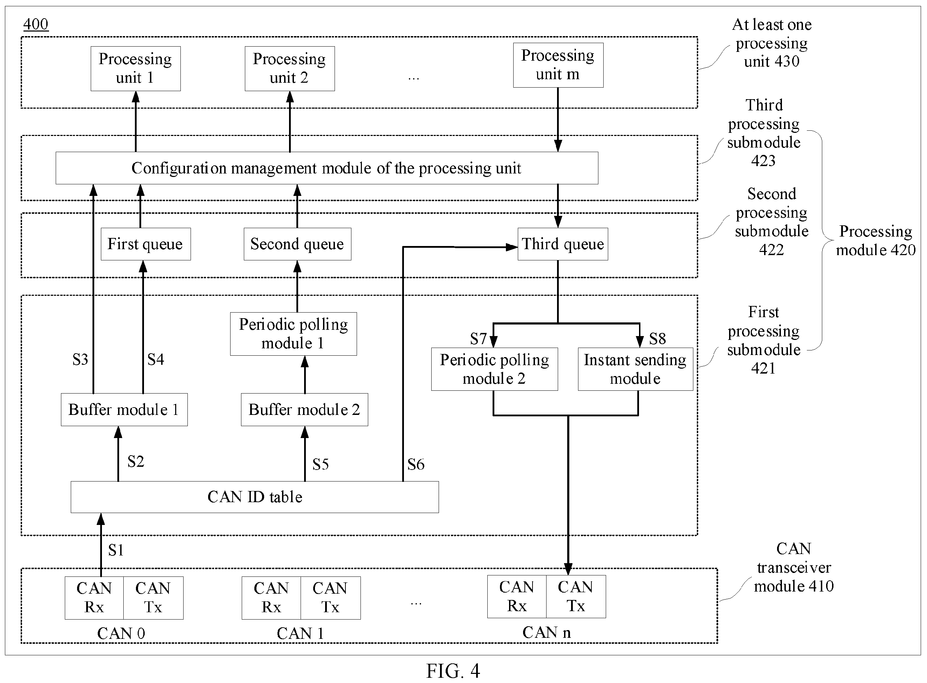

The following describes a system architecture in this application with reference to FIG. 3 and FIG. 4. It should be understood that the system architectures shown in FIG. 3 and FIG. 4 are merely used as examples, and do not constitute a limitation on the solutions of this application. During actual application, the system architectures may include more or fewer modules. This is not limited in this application.

FIG. 3 is a schematic diagram of a system architecture of packet processing according to an embodiment of this application. The system 300 includes a CAN transceiver module 310, a processing module 320, and at least one processing unit 330. The following describes these modules.

The CAN transceiver module 310 may include at least one CAN transceiver (for example, CAN 0 to CAN n), and each CAN transceiver may include a CAN receiving module (CAN Rx) and a CAN sending module (CAN Tx). The CAN receiving module may be configured to receive a packet on a CAN bus, that is, receive the packet from the CAN bus, and upload the packet to the processing module 320. The CAN sending module may be configured to send the packet on the CAN bus, that is, obtain the packet from the processing module 320, and send the packet to the CAN bus.

Optionally, the packet received and sent by the CAN transceiver may include but is not limited to a CAN packet form such as a CAN, a CAN with a flexible rate (CAN with flexible data rate, CAN FD), a highly extensible CAN XL, a standard frame, or an extended frame.

A form of the CAN transceiver may include but is not limited to an independent CAN transceiver, a CAN transceiver built in an MCU, another independent device with a transceiver capability, or the like. This is not limited.

The at least one processing unit 330 may include a processing unit 1 to a processing unit m. Each processing unit may obtain the packet from the processing module 320, and process the obtained packet; or may send a processed packet to the processing module 320, and transfer the processed packet to the CAN transceiver for sending after being processed by the processing module 320. It should be understood that each processing unit and the processing module 320 may communicate with each other in two directions, and may support a plurality of manners such as full duplex and half duplex.

The processing module 320 may obtain the packet from the CAN transceiver module 310, and process the packet according to the foregoing method 100 or 200. For example, a priority corresponding to the packet may be determined based on an identifier of the obtained packet, and then whether to perform interrupt processing or periodic polling on the packet is determined based on the priority corresponding to the packet. For another example, whether the packet needs to be routed and forwarded may be determined based on an identifier of the packet. When the packet does not need to be routed and forwarded, whether to perform interrupt processing or periodic polling on the packet is determined based on the priority corresponding to the packet; and when the packet needs to be routed and forwarded, routing and forwarding are directly performed on the packet. For another example, a processing unit corresponding to the packet may be determined based on the identifier of the packet, and the packet is uploaded to the processing unit corresponding to the packet, so that the processing unit corresponding to the packet can process the packet.

The processing module 320 may alternatively obtain the packet from the processing unit, and process the obtained packet. For example, the processing module 320 may obtain the packet from the processing unit, determine, based on the priority of the packet, whether to perform real-time sending or periodic polling sending on the packet, and determine a CAN transceiver corresponding to the packet.

In a possible implementation, the processing module 320 may be used as a whole to perform the steps in the method 100 or 200.

In another possible implementation, the processing module 320 may also include a plurality of processing submodules, and the steps in the method 100 or 200 are implemented by using a joint function of the processing submodules.

In an example, FIG. 4 is a schematic diagram of another system architecture of packet processing according to an embodiment of this application. As shown in FIG. 4, the system 400 may include a CAN transceiver module 410, a processing module 420, and at least one processing unit 430. The processing module 420 includes a first processing submodule 421, a second processing submodule 422, and a third processing submodule 423. The three processing submodules may communicate and interact with each other by using an internal bus. The following describes, by using an example, a task executed by each processing submodule and a related function module. It should be noted that a division manner of the processing submodules and the following function descriptions are merely used as an example, and cannot constitute a limitation on the solutions of this application. During actual operation, more or fewer processing submodules may also be included. The task executed by each processing submodule and the related function module may also have other possibilities. This is not limited.

Each CAN transceiver in the CAN transceiver module 410 may receive a packet from a CAN bus and upload the packet to the first processing submodule 421, or may obtain a packet from the first processing submodule 421 and send the packet to a CAN bus. For other content of the CAN transceiver module 410, refer to the foregoing related description of the CAN transceiver module 310. Details are not described again.

Each of the at least one processing unit 430 may obtain packet data from the third processing submodule 423 and process the packet data, and each processing unit may send a related processing result to the third processing submodule 423, and the third processing submodule 423 implements routing and forwarding. For other content of the at least one processing unit 430, refer to the foregoing related description of the at least one processing unit 330. Details are not described again.

The first processing submodule 421 may be configured to obtain the packet from the CAN transceiver module 410, determine, based on an identifier (namely, a CAN ID) of the packet, a priority and a processing unit that correspond to the packet, and determine a processing manner for the packet based on the priority of the packet (that is, determine to perform interrupt processing or periodic polling on the packet, or determine to directly perform interrupt processing or perform, based on a first queue, interrupt processing or periodic polling on the packet). The first processing submodule 421 may further determine, based on the CAN ID, whether the packet needs to be routed and forwarded. For a specific determining manner, refer to the foregoing description. Details are not described again.

The foregoing "determine a processing manner for the packet" may also be understood as determining a packet processing path (or channel), determining a packet transfer path (or channel), or the like. This is not limited in this application.

The first processing submodule 421 may include any one or more of an identifier mapping table (namely, a CAN ID table) of the packet, a buffer module 1, a buffer module 2, a periodic polling module 1, a periodic polling module 2, an instant sending module, and the like.

The CAN ID table may be understood as a CAN ID mapping table. Based on the CAN ID table, after the packet is obtained from the CAN transceiver module 410, the priority corresponding to the packet may be determined based on the ID of the packet, or a processing unit corresponding to the packet may be determined based on a mapping relationship between the ID of the packet and the processing unit, or whether the packet needs to be routed and forwarded may be determined based on a mapping relationship between the ID of the packet and whether to perform routing and forwarding.

The buffer module 1 may be memory space configured to buffer high-priority (for example, the first priority, the third priority, or the fourth priority described above) packet data. In other words, when it is determined, based on the ID of the packet, that the priority of the packet is high, data of the packet may be buffered in the buffer module 1. It should be understood that the packet data buffered in the buffer module 1 may be directly transferred to the third processing submodule 423. For example, when the priority of a packet is higher (for example, the foregoing third priority), the packet data may be directly transferred to the third processing submodule 423. The packet data buffered by the buffer module 1 may alternatively be transferred to the second processing submodule 422. For example, when the priority of the packet is generally high (for example, the foregoing fourth priority), the packet data may be transferred to the second processing submodule 422.

The buffer module 2 may be memory space configured to buffer data of a low-priority (for example, the foregoing second priority) packet. In other words, when it is determined, based on the ID of the packet, that the priority of the packet is low, the data of the packet may be buffered in the buffer module 2.

The periodic polling module 1 may be understood as a module for periodically reading packet information in a packet receiving process. The periodic polling module 1 may receive the packet data from the buffer module 2, and support transfer of the packet data to the second processing submodule 422.

The periodic polling module 2 may be understood as a module for periodically writing the packet information in a packet sending process. The periodic polling module 2 supports packet data writing from the second processing submodule 422, and transfers the packet data to a CAN Tx of a CAN transceiver, to implement packet data sending.

The instant sending module may be understood as an instant writing module for the packet information in the packet sending process, also supports packet data writing from the second processing submodule 422, and transfers the packet data to a CAN Tx of a CAN transceiver, to implement packet data sending.

During packet processing, based on the first processing submodule 421, on one hand, priorities of packets may be distinguished from a source, and packet processing efficiency and real-time processing are considered; on the other hand, whether the packet needs to be routed and forwarded may be determined from the source, to reduce packet processing steps, and reduce a waiting time and a processing time for routing and forwarding of the packet. In addition, the processing unit corresponding to the packet can be specified, so that use of CPU resources of different processing units can be balanced, overload of a single processing unit is avoided, and overall resource utilization and packet processing efficiency are improved.

The second processing submodule 422 may obtain the packet from the first processing submodule 421, and manage an uploading path and a processing path of the packet based on the packet data. For example, the second processing submodule 422 may configure a processing path of the packet uploaded by the first processing submodule 421, so that the packet may be transferred to the third processing submodule 423 through different receiving queues, or routed and forwarded through a sending queue.

The second processing submodule 422 may include any one or more of the first queue, a second queue, a third queue, and the like.

The first queue may be understood as a receiving queue of a packet with a generally high priority (for example, the foregoing fourth priority). The first queue may be transferred to the third processing submodule 423 at a higher layer after receiving the packet data from the buffer module 1 in the first processing submodule 421 through an interrupt.

The second queue may be understood as a receiving queue of the low-priority (for example, the foregoing second priority) packet. The second queue may be transferred to the third processing submodule 423 at a higher layer after periodically receiving the packet data from the periodic polling module 1 in the first processing submodule 421.

The third queue may be understood as a sending buffer queue. The third queue may obtain the packet data processed by the processing unit from the third processing submodule 423, or may obtain packet data that needs to be routed and forwarded from the first processing submodule 421. The third queue may further send the packet data to the periodic polling module 2 or the instant sending module in the first processing submodule 421, to perform packet sending and transfer.

When the second processing submodule 422 processes the packet, a case in which a large quantity of packets are queued and wait for processing can be avoided. It can be ensured that a high-priority packet is preferentially processed, and a packet with a higher priority is directly transferred for processing without waiting, thereby greatly improving reliability of packet processing.

The third processing submodule 423 may receive the packet from the first processing submodule 421 or the second processing submodule 422, and transfer the packet to the corresponding processing unit; or may be configured to receive the packet from the processing unit, and transfer the packet to the second processing submodule 422.

The third processing submodule 423 may include a configuration management module of the processing unit, and the configuration management module of the processing unit may be configured to manage the at least one processing unit 430. For example, the configuration management module of the processing unit may be configured to manage a matching mapping relationship between the processing unit and the ID of the packet (or a packet receiving and sending queue), and may configure whether each processing unit needs to support CAN packet receiving and sending information processing. The configuration management module of the processing unit supports any flexible combination configuration. For example, one ID of the packet may be configured to correspond to one processing unit, or one ID of the packet may be configured to correspond to a plurality of processing units, or N packet identities may be configured to correspond to M processing units, where N is greater than M. For another example, the first queue may be configured to correspond to a first processing unit set. The first processing unit set may include any one or more processing units. The second queue may correspond to a second processing unit set. The second processing unit set may include any one or more processing units.

When the first processing submodule 421 processes the packet, use of CPU resources of the processing units may be balanced, to avoid a case in which CPU resources of some processing units are overloaded and other processing units are basically idle.

Based on the foregoing system 400, the following uses a packet received by a CAN Rx in a CAN 0 as an example to describe a specific processing procedure (including steps S1 to S8 with reference to FIG. 4) of the packet.

Step S1: A CAN Rx in the CAN transceiver (for example, the CAN 0) transfers the packet received from the CAN bus to the first processing submodule 421, to determine, through the CAN ID table in the first processing submodule 421, a priority and a processing unit that correspond to the packet, and whether the packet needs to be routed and forwarded.

When it is determined, based on the CAN ID table in the first processing submodule 421, that the priority of the packet is high and the packet does not need to be routed and forwarded, step S2 continues to be performed; when it is determined, based on the CAN ID table in the first processing submodule 421, that the priority of the packet is low and the packet does not need to be routed and forwarded, step S5 continues to be performed; and when it is determined, based on the CAN ID table in the first processing submodule 421, that the packet needs to be routed and forwarded, step S6 continues to be performed.

Step S2: Upload the packet to the buffer module 1, and determine, based on the priority corresponding to the packet, a manner of performing interrupt processing on the packet.

When the priority of the packet is higher, step S3 continues to be performed, to directly perform interrupt processing on the packet; and when the priority of the packet is generally high, step S4 continues to be performed, to perform interrupt processing on the packet based on the first queue in the second processing submodule 422.

Step S3: The buffering module 1 directly uploads the packet to the third processing submodule 423, and transfers the packet to a corresponding processing unit through the third processing submodule 423, to implement direct interrupt processing on the packet.

Step S4: The buffer module 1 uploads the packet to the first queue in the second processing submodule 422, transfers the packet to the third processing submodule 423 based on the first queue in the second processing submodule 422, and transfers the packet to the corresponding processing unit through the third processing submodule 423, to implement interrupt processing on the packet based on the first queue in the second processing submodule 422.

Step S5: Upload the packet to the buffer module 2. The buffer module 2 uploads the packet to the periodic polling module 1, the periodic polling module 1 uploads the packet to the second queue in the second processing submodule 422, then transfers the packet to the third processing submodule 423 based on the second queue in the second processing submodule 422, and transfers the packet to the corresponding processing unit through the third processing submodule 423, to implement periodic polling on the packet based on the second queue in the second processing submodule 422.

Step S6: Upload the packet to the third queue in the second processing submodule 422, and continue to perform step S7 or S8, to implement routing and forwarding on the packet.

Step S7: When the priority corresponding to the packet is low, transfer the packet to the periodic polling module 2 in the first processing submodule 421 based on the third queue. Then the periodic polling module 2 transfers packet data to a CAN Tx of a CAN transceiver (for example, a CAN n) in the CAN transceiver module 410, to implement periodic polling sending of the packet data based on the CAN Tx of the CAN transceiver.

Step S8: When the priority corresponding to the packet is high, transfer the packet to the instant sending module in the first processing submodule 421 based on the third queue. Then the instant sending module transfers packet data to a CAN Tx of a CAN transceiver (for example, a CAN n) in the CAN transceiver module 410, to implement instant sending of the packet data based on the CAN Tx of the CAN transceiver.

In a possible implementation, the foregoing processing procedure may be implemented through software coding. For other descriptions, refer to the foregoing descriptions. Details are not described again.

In another possible implementation, the foregoing processing procedure may be implemented by a combination of software and hardware, to accelerate a processing process. For other descriptions, refer to the foregoing descriptions. Details are not described again.

In still another possible implementation, some operations in the foregoing processing procedure may be implemented through software encoding, and the other operations may be implemented through a combination of software and hardware. For example, the operations related to the first processing submodule 421 may be implemented in a manner of chip hardening, and the operations related to the second processing submodule 422 and the third processing submodule 423 may be implemented in a manner of software coding.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

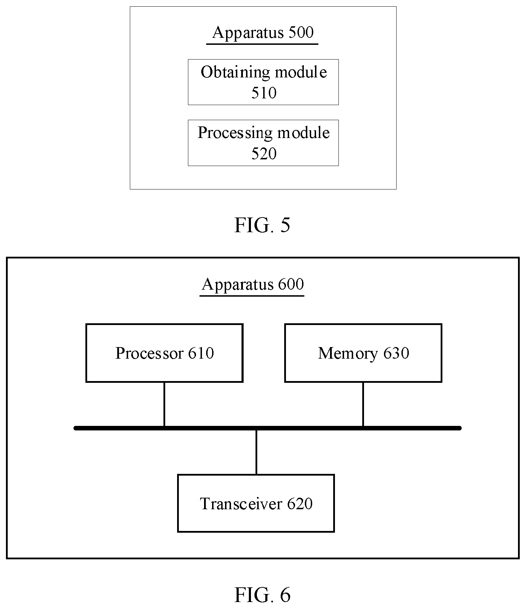

The following describes an apparatus provided in embodiments of this application with reference to FIG. 5 and FIG. 6. It should be understood that descriptions of apparatus embodiments correspond to the descriptions of the method embodiments. Therefore, for content that is not described in detail, refer to the foregoing method embodiments. For brevity, details are not described herein again.

FIG. 5 is a schematic block diagram of a packet processing apparatus 500 according to an embodiment of this application. The apparatus 500 includes an obtaining module 510 and a processing module 520.

The obtaining module 510 is configured to obtain a first packet, where the first packet corresponds to a first identifier.

The processing module 520 is configured to determine a priority of the first packet based on the first identifier; and when the first packet corresponds to a first priority, perform interrupt processing on the first packet; or when the first packet corresponds to a second priority, perform periodic polling on the first packet, where the first priority is higher than the second priority.

Optionally, the processing module 520 may be further configured to: when the first priority is a third priority, directly perform interrupt processing on the first packet; or when the first priority is a fourth priority, perform interrupt processing on the first packet based on a first queue, where the first queue is a queue whose priority is higher than a first threshold in at least two queues, and the third priority is higher than the fourth priority.

Optionally, the processing module 520 may be further configured to perform periodic polling on the first packet based on a second queue, where the second queue is a queue whose priority is lower than a second threshold in the at least two queues.

Optionally, the obtaining module 510 may be further configured to obtain a second packet, where the second packet includes a second identifier; and the processing module 520 may be further configured to: determine, based on the first identifier, that the first packet is associated with a first processing unit; determine, based on the second identifier, that the second packet is associated with a second processing unit; and process the first packet and the second packet respectively based on the first processing unit and the second processing unit.

Optionally, the processing module 520 may be further configured to determine, based on the first identifier, whether the first packet needs to be routed and forwarded; and when it is determined that the first packet does not need to be routed and forwarded, perform interrupt processing or periodic polling on the first packet.

Optionally, the processing module 520 may be further configured to: when it is determined that the first packet needs to be routed and forwarded, perform routing and forwarding on the first packet.

Optionally, the processing module 520 may be further configured to: when the first packet corresponds to a fifth priority, perform real-time forwarding on the first packet; or when the first packet corresponds to a sixth priority, perform periodic polling and forwarding on the first packet, where the fifth priority is higher than the sixth priority.

It should be understood that division into units in the foregoing apparatus is merely logical function division. During actual implementation, all or a part of the units may be integrated into one physical entity, or may be physically separated. In addition, a unit in the apparatus may be implemented in a form of processor invoking software. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor, such as a CPU or a microprocessor, and the memory is a memory inside the apparatus or a memory outside the apparatus. Alternatively, the unit in the apparatus may be implemented in a form of hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all units are implemented by designing a logical relationship between elements in the circuit. For another example, in another implementation, the hardware circuit may be implemented by using a programmable logic device (programmable logic device, PLD). An FPGA is used as an example. The FPGA may include a large quantity of logic gate circuits, and a connection relationship between the logic gate circuits is configured by using a configuration file, to implement functions of some or all of the foregoing units. All units in the foregoing apparatus may be implemented in the form of processor invoking software, or may be implemented in the form of hardware circuit, or some of the units are implemented in the form of processor invoking software, and the remaining units are implemented in the form of the hardware circuit.

In embodiments of this application, the processor is a circuit having a signal processing capability. In an implementation, the processor may be a circuit with an instruction reading and running capability, for example, a CPU, a microprocessor, a graphics processing unit (graphics processing unit, GPU), or a DSP. In another implementation, the processor may implement a specific function by using a logical relationship of the hardware circuit, and the logical relationship of the hardware circuit is fixed or can be reconstructed. For example, the processor is a hardware circuit implemented by the ASIC or the PLD, for example, the FPGA. In a reconfigurable hardware circuit, a process in which the processor loads a configuration document to implement hardware circuit configuration may be understood as a process in which the processor loads instructions to implement the functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of SoC. The SoC may include at least one processor, configured to implement any one of the foregoing methods or implement functions of units in the apparatus. Types of the at least one processor may be different, for example, include a CPU and an FPGA, a CPU and an artificial intelligence processor, a CPU and a GPU, or the like.

FIG. 6 is a schematic block diagram of another packet processing apparatus according to an embodiment of this application. The packet processing apparatus 600 shown in FIG. 6 may include a processor 610, a transceiver 620, and a memory 630. The processor 610, the transceiver 620, and the memory 630 are connected through an internal connection path. The memory 630 is configured to store a computer program (namely, instructions). The processor 610 is configured to execute the computer program stored in the memory 630, so that the transceiver 620 receives/sends some parameters. Optionally, the memory 630 may be coupled to the processor 610 by using an interface, or integrated with the processor 610.

It should be noted that the transceiver 620 may include but is not limited to a transceiver apparatus such as an input/output interface (input/output interface), to implement communication between the apparatus 600 and another device or a communication network.

During implementation, steps of the foregoing methods can be completed by a hardware integrated logic circuit in the processor 610 or instructions in a form of software. The methods disclosed with reference to embodiments of this application may be directly performed by a hardware processor, or may be performed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory 630. The processor 610 reads information in the memory 630, and completes the steps of the foregoing method in combination with hardware of the processor 610. To avoid repetition, details are not described herein again.

The processor 610 may be a general-purpose CPU, a microprocessor, an ASIC, a GPU, or one or more integrated circuits, and is configured to execute a related program, to implement the packet processing method in the method embodiments of this application. The processor 610 may alternatively be an integrated circuit chip, and has a signal processing capability. In a specific implementation process, steps of the packet processing method in this application may be completed by using a hardware integrated logical circuit in the processor 610, or by using instructions in a form of software. The processor 610 may alternatively be a general-purpose processor, a DSP, an ASIC, an FPGA or another programmable logic device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 630. The processor 610 reads information in the memory 630, and performs the packet processing method in the method embodiments of this application in combination with hardware of the processor 610.

The memory 630 may be a read-only memory (Read-Only Memory, ROM), a static storage device, a dynamic storage device, or a random access memory (Random Access Memory, RAM).

The transceiver 620 uses a transceiver apparatus, for example, but not limited to, a transceiver, to implement communication between the apparatus 600 and another device or a communication network. For example, the first packet may be received through the transceiver 620.

An embodiment of this application further provides a packet processing system. The packet processing system includes: A packet transceiver is configured to receive a packet; and the foregoing packet processing apparatus is configured to obtain the packet from the packet transceiver, and process the obtained packet according to the processing procedure shown in the method 100 or 200 or FIG. 4.

An embodiment of this application further provides a vehicle. The vehicle may include the apparatus 500, the apparatus 600, the system 300, or the system 400.

An embodiment of this application further provides a computer program product. The computer program product includes computer program code. When the computer program code is run on a computer, a computer is enabled to perform the packet processing procedure shown in the method 100 or 200 or FIG. 4.

An embodiment of this application further provides a computer-readable storage medium. The computer-readable storage medium stores a computer program. When the computer program is executed by a computer, the packet processing procedure shown in the method 100 or 200 or FIG. 4 is implemented.

An embodiment of this application further provides a chip. The chip includes a processor, configured to invoke a computer program or computer instructions stored in a memory, so that the processor performs the packet processing procedure shown in the method 100 or 200 or FIG. 4.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. Indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part of or all the units may be selected based on an actual requirement to implement objectives of the solutions in this embodiment.

In addition, functional units in embodiments of this application may be integrated into one processing unit. Each of the units may alternatively exist alone physically, or two or more units are integrated into one unit.

When the functions are implemented in a form of software functional unit and sold or used as an independent product, the functions may be stored in a computer-readable storage medium. Based on such an understanding, all or some of the technical solutions of this application may be implemented in a form of software product. The computer software product is stored in a storage medium, and includes several instructions for instructing a computer device (which may be a personal computer, a server, or a network device) to perform all or some of the steps of the methods described in the embodiments. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A packet processing method (100), comprising:
obtaining (S110) a first packet, wherein the first packet is a controller area network, CAN, packet and corresponds to a first identifier in which each bit indicates a dominant level or a recessive level;
**characterized by** determining (S120) a priority of the first packet based on the first identifier; and
when (S130) a bit of the first packet indicates a dominant level and the first packet corresponds to a first priority, performing interrupt processing on the first packet; or when (S130) the bit of the first packet indicates a recessive level and the first packet corresponds to a second priority, performing periodic polling on the first packet, wherein the first priority is higher than the second priority.

2. The method (100) according to claim 1, wherein the performing interrupt processing on the first packet comprises:
when the first priority is a third priority, directly performing interrupt processing on the first packet; or
when the first priority is a fourth priority, performing interrupt processing on the first packet based on a first queue, wherein the first queue is a queue whose priority is higher than a first threshold in at least two queues, and the third priority is higher than the fourth priority.

3. The method (100) according to claim 2, wherein the performing periodic polling on the first packet comprises: performing periodic polling on the first packet based on a second queue, wherein the second queue is a queue whose priority is lower than a second threshold in the at least two queues.

4. The method (100) according to any one of claims 1 to 3, wherein the method (100) further comprises:
determining, based on the first identifier, that the first packet is associated with a first processing unit;
obtaining a second packet, wherein the second packet comprises a second identifier;
determining, based on the second identifier, that the second packet is associated with a second processing unit; and
processing the first packet and the second packet respectively based on the first processing unit and the second processing unit.

5. The method (100) according to any one of claims 1 to 4, wherein the method (100) further comprises:
determining, based on the first identifier, whether the first packet needs to be routed and forwarded; and
when it is determined that the first packet does not need to be routed and forwarded, performing interrupt processing or periodic polling on the first packet.

6. The method (100) according to claim 5, wherein the method (100) further comprises:
when it is determined that the first packet needs to be routed and forwarded, performing routing and forwarding on the first packet.

7. The method (100) according to claim 6, wherein the performing routing and forwarding on the first packet comprises:
when the first packet corresponds to a fifth priority, performing real-time forwarding on the first packet; or when the first packet corresponds to a sixth priority, performing periodic polling and forwarding on the first packet, wherein the fifth priority is higher than the sixth priority.

8. A packet processing apparatus (500), comprising an obtaining module (510) and a processing module (520), wherein
the obtaining module (510) is configured to obtain a first packet, wherein the first packet is a controller area network, CAN, packet and corresponds to a first identifier in which each bit indicates a dominant level or a recessive level; and
the processing module (520) is **characterized by** being configured to: determine a priority of the first packet based on the first identifier; and when a bit of the first packet indicates a dominant level and the first packet corresponds to a first priority, perform interrupt processing on the first packet; or when the bit of the first packet indicates a recessive level and the first packet corresponds to a second priority, perform periodic polling on the first packet, wherein the first priority is higher than the second priority.

9. The apparatus (500) according to claim 8, wherein the processing module (520) is further configured to:
when the first priority is a third priority, directly perform interrupt processing on the first packet; or when the first priority is a fourth priority, perform interrupt processing on the first packet based on a first queue, wherein the first queue is a queue whose priority is higher than a first threshold in at least two queues, and the third priority is higher than the fourth priority.

10. The apparatus (500) according to claim 9, wherein the processing module (520) is further configured to:
perform periodic polling on the first packet based on a second queue, wherein the second queue is a queue whose priority is lower than a second threshold in the at least two queues.

11. The apparatus (500) according to any one of claims 8 to 10, wherein
the obtaining module (510) is further configured to obtain a second packet, wherein the second packet comprises a second identifier; and
the processing module (520) is further configured to: determine, based on the first identifier, that the first packet is associated with a first processing unit; determine, based on the second identifier, that the second packet is associated with a second processing unit; and process the first packet and the second packet respectively based on the first processing unit and the second processing unit.

12. The apparatus (500) according to any one of claims 8 to 11, wherein the processing module (520) is further configured to:
determine, based on the first identifier, whether the first packet needs to be routed and forwarded; and when it is determined that the first packet does not need to be routed and forwarded, perform interrupt processing or periodic polling on the first packet.

13. The apparatus (500) according to claim 12, wherein the processing module (520) is further configured to:
when it is determined that the first packet needs to be routed and forwarded, perform routing and forwarding on the first packet.

14. The apparatus (500) according to claim 13, wherein the processing module (520) is further configured to:
when the first packet corresponds to a fifth priority, perform real-time forwarding on the first packet; or when the first packet corresponds to a sixth priority, perform periodic polling and forwarding on the first packet, wherein the fifth priority is higher than the sixth priority.

15. A packet processing apparatus, comprising:
a memory, configured to store a computer program; and
a processor, configured to execute the computer program stored in the memory, to enable the apparatus to perform the method according to any one of claims 1 to 7.

16. A packet processing system, comprising:
a packet transceiver, configured to receive a first packet, wherein
the packet processing apparatus according to any one of claims 8 to 15 is configured to obtain the first packet from the packet transceiver, and process the first packet.

17. A vehicle, comprising the apparatus according to any one of claims 8 to 15, and/or comprising the system according to claim 16.

18. A computer-readable storage medium, wherein the computer-readable storage medium stores a computer program; and when the computer program is executed by a computer, the method according to any one of claims 1 to 7 is implemented.

19. A chip, wherein the chip comprises a processor and a data interface, and the processor reads, by using the data interface, instructions stored in a memory, to perform the method according to any one of claims 1 to 7.

## Patentansprüche

1. Paketverarbeitungsverfahren (100), umfassend:
Erlangen (S110) eines ersten Pakets, wobei das erste Paket ein Controller Area Network-Paket, CAN-Paket, ist und einer ersten Kennung entspricht, in welcher jedes Bit ein dominantes Niveau oder ein rezessives Niveau angibt;
**gekennzeichnet durch** Bestimmen (S120) einer Priorität des ersten Pakets basierend auf der ersten Kennung; und
wenn (S130) ein Bit des ersten Pakets ein dominantes Niveau angibt und das erste Paket einer ersten Priorität entspricht, Durchführen einer Unterbrechungsverarbeitung an dem ersten Paket; oder wenn (S130) das Bit des ersten Pakets ein rezessives Niveau angibt und das erste Paket einer zweiten Priorität entspricht, Durchführen periodischer Abfragen an dem ersten Paket, wobei die erste Priorität höher als die zweite Priorität ist.

2. Verfahren (100) nach Anspruch 1, wobei das Durchführen der Unterbrechungsverarbeitung an dem ersten Paket Folgendes umfasst:
wenn die erste Priorität eine dritte Priorität ist, direktes Durchführen der Unterbrechungsverarbeitung an dem ersten Paket; oder
wenn die erste Priorität eine vierte Priorität ist, Durchführen einer Unterbrechungsverarbeitung an dem ersten Paket basierend auf einer ersten Warteschlange, wobei die erste Warteschlange eine Warteschlange ist, deren Priorität höher als ein erster Schwellenwert in mindestens zwei Warteschlangen ist, und die dritte Priorität höher als die vierte Priorität ist.

3. Verfahren (100) nach Anspruch 2, wobei das Durchführen periodischer Abfragen an dem ersten Paket Folgendes umfasst: Durchführen periodischer Abfragen an dem ersten Paket basierend auf einer zweiten Warteschlange, wobei die zweite Warteschlange eine Warteschlange ist, deren Priorität niedriger als ein zweiter Schwellenwert in den mindestens zwei Warteschlangen ist.

4. Verfahren (100) nach einem der Ansprüche 1 bis 3, wobei das Verfahren (100) ferner Folgendes umfasst:
Bestimmen basierend auf der ersten Kennung, dass das erste Paket mit einer ersten Verarbeitungseinheit verbunden ist;
Erlangen eines zweiten Pakets, wobei das zweite Paket eine zweite Kennung umfasst;
Bestimmen basierend auf der zweiten Kennung, dass das zweite Paket mit einer zweiten Verarbeitungseinheit verbunden ist; und Verarbeiten des ersten Pakets bzw. des zweiten Pakets basierend auf der ersten Verarbeitungseinheit und der zweiten Verarbeitungseinheit.

5. Verfahren (100) nach einem der Ansprüche 1 bis 4, wobei das Verfahren (100) ferner Folgendes umfasst:
Bestimmen basierend auf der ersten Kennung, ob das erste Paket geroutet und weitergeleitet werden muss; und
wenn bestimmt wird, dass das erste Paket nicht geroutet und weitergeleitet werden muss, Durchführen einer Unterbrechungsverarbeitung oder periodischer Abfragen an dem ersten Paket.

6. Verfahren (100) nach Anspruch 5, wobei das Verfahren (100) ferner Folgendes umfasst:
wenn bestimmt wird, dass das erste Paket geroutet und weitergeleitet werden muss, Durchführen des Routings und Weiterleitens an dem ersten Paket.

7. Verfahren (100) nach Anspruch 6, wobei das Durchführen des Routings und Weiterleitens an dem ersten Paket Folgendes umfasst:
wenn das erste Paket einer fünften Priorität entspricht, Durchführen des Weiterleitens in Echtzeit an dem ersten Paket; oder, wenn das erste Paket einer sechsten Priorität entspricht, Durchführen periodischer Abfragen und des Weiterleitens an dem ersten Paket, wobei die fünfte Priorität höher als die sechste Priorität ist.

8. Paketverarbeitungsvorrichtung (500), umfassend ein Erlangungsmodul (510) und ein Verarbeitungsmodul (520), wobei das Erlangungsmodul (510) dazu konfiguriert ist, ein erstes Paket zu erlangen, wobei das erste Paket ein Controller Area Network-Paket, CAN-Paket, ist und einer ersten Kennung entspricht, in welcher jedes Bit ein dominantes Niveau oder ein rezessives Niveau angibt; und
das Verarbeitungsmodul (520) **dadurch gekennzeichnet ist, dass** es dazu konfiguriert ist: eine Priorität des ersten Pakets basierend auf der ersten Kennung zu bestimmen; und, wenn ein Bit des ersten Pakets ein dominantes Niveau angibt und das erste Paket einer ersten Priorität entspricht, eine Unterbrechungsverarbeitung an dem ersten Paket durchzuführen; oder, wenn das Bit des ersten Pakets ein rezessives Niveau angibt und das erste Paket einer zweiten Priorität entspricht, periodische Abfragen an dem ersten Paket durchzuführen, wobei die erste Priorität höher als die zweite Priorität ist.

9. Vorrichtung (500) nach Anspruch 8, wobei das Verarbeitungsmodul (520) ferner dazu konfiguriert ist:
wenn die erste Priorität eine dritte Priorität ist, eine Unterbrechungsverarbeitung direkt an dem ersten Paket durchzuführen; oder, wenn die erste Priorität eine vierte Priorität ist, eine Unterbrechungsverarbeitung an dem ersten Paket basierend auf einer ersten Warteschlange durchzuführen, wobei die erste Warteschlange eine Warteschlange ist, deren Priorität höher als ein erster Schwellenwert in mindestens zwei Warteschlangen ist, und die dritte Priorität höher als die vierte Priorität ist.

10. Vorrichtung (500) nach Anspruch 9, wobei das Verarbeitungsmodul (520) ferner dazu konfiguriert ist:
periodische Abfragen an dem ersten Paket basierend auf einer zweiten Warteschlange durchzuführen, wobei die zweite Warteschlange eine Warteschlange ist, deren Priorität niedriger als ein zweiter Schwellenwert in den mindestens zwei Warteschlangen ist.

11. Vorrichtung (500) nach einem der Ansprüche 8 bis 10, wobei das Erlangungsmodul (510) ferner dazu konfiguriert ist, ein zweites Paket zu erlangen, wobei das zweite Paket eine zweite Kennung umfasst; und
das Verarbeitungsmodul (520) ferner dazu konfiguriert ist: basierend auf der ersten Kennung zu bestimmen, dass das erste Paket mit einer ersten Verarbeitungseinheit verbunden ist; basierend auf der zweiten Kennung zu bestimmen, dass das zweite Paket mit einer zweiten Verarbeitungseinheit verbunden ist; und das erste Paket und das zweite Paket jeweils basierend auf der ersten Verarbeitungseinheit und der zweiten Verarbeitungseinheit zu verarbeiten.

12. Vorrichtung (500) nach einem der Ansprüche 8 bis 11, wobei das Verarbeitungsmodul (520) ferner dazu konfiguriert ist:
basierend auf der ersten Kennung zu bestimmen, ob das erste Paket geroutet und weitergeleitet werden muss; und, wenn bestimmt wird, dass das erste Paket nicht geroutet und weitergeleitet werden muss, eine Unterbrechungsverarbeitung oder periodische Abfragen an dem ersten Paket durchzuführen.

13. Vorrichtung (500) nach Anspruch 12, wobei das Verarbeitungsmodul (520) ferner dazu konfiguriert ist:
wenn bestimmt wird, dass das erste Paket geroutet und weitergeleitet werden muss, Routing und Weiterleiten an dem ersten Paket durchzuführen.

14. Vorrichtung (500) nach Anspruch 13, wobei das Verarbeitungsmodul (520) ferner dazu konfiguriert ist:
wenn das erste Paket einer fünften Priorität entspricht, das Weiterleiten in Echtzeit an dem ersten Paket durchzuführen; oder, wenn das erste Paket einer sechsten Priorität entspricht, periodische Abfragen und das Weiterleiten an dem ersten Paket durchzuführen, wobei die fünfte Priorität höher als die sechste Priorität ist.

15. Paketverarbeitungsvorrichtung, umfassend:
einen Speicher, der dazu konfiguriert ist, ein Computerprogramm zu speichern; und
einen Prozessor, der dazu konfiguriert ist, das in dem Speicher gespeicherte Computerprogramm auszuführen, um die Vorrichtung in die Lage zu versetzen, das Verfahren nach einem der Ansprüche 1 bis 7 durchzuführen.

16. Paketverarbeitungssystem, umfassend:
einen Paketsendeempfänger, der dazu konfiguriert ist, ein erstes Paket zu empfangen, wobei
die Paketverarbeitungsvorrichtung nach einem der Ansprüche 8 bis 15 dazu konfiguriert ist, das erste Paket von dem Paketsendeempfänger zu erlangen und das erste Paket zu verarbeiten.

17. Fahrzeug, umfassend die Vorrichtung nach einem der Ansprüche 8 bis 15 und/oder umfassend das System nach Anspruch 16.

18. Computerlesbares Speichermedium, wobei das computerlesbare Speichermedium ein Computerprogramm speichert; und, wenn das Computerprogramm durch einen Computer ausgeführt wird, das Verfahren nach einem der Ansprüche 1 bis 7 implementiert wird.

19. Chip, wobei der Chip einen Prozessor und eine Datenschnittstelle umfasst, und der Prozessor unter Verwendung der Datenschnittstelle in einem Speicher gespeicherte Anweisungen liest, um das Verfahren nach einem der Ansprüche 1 bis 7 durchzuführen.

## Revendications

1. Procédé de traitement de paquets (100), comprenant :
l'obtention (S110) d'un premier paquet, dans lequel le premier paquet est un paquet de réseau de zone de commande, CAN, et correspond à un premier identifiant dans lequel chaque bit indique un niveau dominant ou un niveau récessif ;
**caractérisé par** la détermination (S120) d'une priorité du premier paquet sur la base du premier identifiant ; et
lorsque (S130) un bit du premier paquet indique un niveau dominant et que le premier paquet correspond à une première priorité, la réalisation d'un traitement d'interruption sur le premier paquet ; ou lorsque (S130) le bit du premier paquet indique un niveau récessif et que le premier paquet correspond à une deuxième priorité, la réalisation d'une interrogation périodique sur le premier paquet, dans lequel la première priorité est supérieure à la deuxième priorité.

2. Procédé (100) selon la revendication 1, dans lequel la réalisation d'un traitement d'interruption sur le premier paquet comprend :
lorsque la première priorité est une troisième priorité, la réalisation directe d'un traitement d'interruption sur le premier paquet ; ou
lorsque la première priorité est une quatrième priorité, la réalisation d'un traitement d'interruption sur le premier paquet sur la base d'une première file d'attente, dans lequel la première file d'attente est une file d'attente dont la priorité est supérieure à un premier seuil dans au moins deux files d'attente, et la troisième priorité est supérieure à la quatrième priorité.

3. Procédé (100) selon la revendication 2, dans lequel la réalisation d'une interrogation périodique sur le premier paquet comprend : la réalisation d'une interrogation périodique sur le premier paquet sur la base d'une seconde file d'attente, dans lequel la seconde file d'attente est une file d'attente dont la priorité est inférieure à un second seuil dans au moins deux files d'attente.

4. Procédé (100) selon l'une quelconque des revendications 1 à 3, dans lequel le procédé (100) comprend en outre :
le fait de déterminer, sur la base du premier identifiant, que le premier paquet est associé à une première unité de traitement ;
l'obtention d'un second paquet, dans lequel le second paquet comprend un second identifiant ;
le fait de déterminer, sur la base du second identifiant, que le second paquet est associé à une seconde unité de traitement ;
et
le traitement du premier paquet et du second paquet respectivement sur la base de la première unité de traitement et de la seconde unité de traitement.

5. Procédé (100) selon l'une quelconque des revendications 1 à 4, dans lequel le procédé (100) comprend en outre :
le fait de déterminer, sur la base du premier identifiant, si le premier paquet doit être acheminé et transféré ; et
lorsqu'il est déterminé que le premier paquet n'a pas besoin d'être acheminé et transféré, la réalisation d'un traitement d'interruption ou d'une interrogation périodique sur le premier paquet.

6. Procédé (100) selon la revendication 5, dans lequel le procédé (100) comprend en outre :
lorsqu'il est déterminé que le premier paquet doit être acheminé et transféré, la réalisation de l'acheminement et du transfert du premier paquet.

7. Procédé (100) selon la revendication 6, dans lequel la réalisation de l'acheminement et du transfert du premier paquet comprennent :
lorsque le premier paquet correspond à une cinquième priorité, la réalisation du transfert en temps réel du premier paquet ; ou lorsque le premier paquet correspond à une sixième priorité, la réalisation d'une interrogation périodique et du transfert du premier paquet, dans lequel la cinquième priorité est supérieure à la sixième priorité.

8. Appareil de traitement de paquets (500), comprenant un module d'obtention (510) et un module de traitement (520), dans lequel le module d'obtention (510) est configuré pour obtenir un premier paquet, dans lequel le premier paquet est un paquet de réseau de zone de commande, CAN, et correspond à un premier identifiant dans lequel chaque bit indique un niveau dominant ou un niveau récessif ; et
le module de traitement (520) est **caractérisé par le fait qu'**il est configuré pour : déterminer une priorité du premier paquet sur la base du premier identifiant ; et lorsqu'un bit du premier paquet indique un niveau dominant et que le premier paquet correspond à une première priorité, réaliser un traitement d'interruption sur le premier paquet ; ou lorsque le bit du premier paquet indique un niveau récessif et que le premier paquet correspond à une deuxième priorité, réaliser une interrogation périodique sur le premier paquet, dans lequel la première priorité est supérieure à la deuxième priorité.

9. Appareil (500) selon la revendication 8, dans lequel le module de traitement (520) est en outre configuré pour :
lorsque la première priorité est une troisième priorité, réaliser directement un traitement d'interruption sur le premier paquet ; ou lorsque la première priorité est une quatrième priorité, réaliser un traitement d'interruption sur le premier paquet sur la base d'une première file d'attente, dans lequel la première file d'attente est une file d'attente dont la priorité est supérieure à un premier seuil dans au moins deux files d'attente, et la troisième priorité est supérieure à la quatrième priorité.

10. Appareil (500) selon la revendication 9, dans lequel le module de traitement (520) est en outre configuré pour :
réaliser une interrogation périodique sur le premier paquet sur la base d'une seconde file d'attente, dans lequel la seconde file d'attente est une file d'attente dont la priorité est inférieure à un second seuil dans au moins deux files d'attente.

11. Appareil (500) selon l'une quelconque des revendications 8 à 10, dans lequel
le module d'obtention (510) est en outre configuré pour acquérir un second paquet, dans lequel le second paquet comprend un second identifiant ; et
le module de traitement (520) est en outre configuré pour : déterminer, sur la base du premier identifiant, que le premier paquet est associé à une première unité de traitement ; déterminer, sur la base du second identifiant, que le second paquet est associé à une seconde unité de traitement ; et traiter respectivement le premier paquet et le second paquet sur la base de la première unité de traitement et de la seconde unité de traitement.

12. Appareil (500) selon l'une quelconque des revendications 8 à 11, dans lequel le module de traitement (520) est en outre configuré pour :
déterminer, sur la base du premier identifiant, si le premier paquet doit être acheminé et transféré ; et lorsqu'il est déterminé que le premier paquet n'a pas besoin d'être acheminé et transféré, réaliser un traitement d'interruption ou une interrogation périodique sur le premier paquet.

13. Appareil (500) selon la revendication 12, dans lequel le module de traitement (520) est en outre configuré pour :
lorsqu'il est déterminé que le premier paquet doit être acheminé et transféré, réaliser l'acheminement et le transfert du premier paquet.

14. Appareil (500) selon la revendication 13, dans lequel le module de traitement (520) est en outre configuré pour :
lorsque le premier paquet correspond à une cinquième priorité, réaliser le transfert en temps réel du premier paquet ; ou lorsque le premier paquet correspond à une sixième priorité, réaliser une interrogation périodique et le transfert du premier paquet, dans lequel la cinquième priorité est supérieure à la sixième priorité.

15. Appareil de traitement de paquets, comprenant :
une mémoire, configurée pour stocker un programme informatique ; et
un processeur, configuré pour exécuter le programme informatique stocké dans la mémoire, pour permettre à l'appareil de réaliser le procédé selon l'une quelconque des revendications 1 à 7.

16. Système de traitement de paquets, comprenant :
un émetteur-récepteur de paquets, configuré pour recevoir un premier paquet, dans lequel
l'appareil de traitement de paquets selon l'une quelconque des revendications 8 à 15 est configuré pour obtenir le premier paquet de l'émetteur-récepteur de paquets et traiter le premier paquet.

17. Véhicule, comprenant l'appareil selon l'une quelconque des revendications 8 à 15, et/ou comprenant le système selon la revendication 16.

18. Support de stockage lisible par ordinateur, dans lequel le support de stockage lisible par ordinateur stocke un programme informatique ; et lorsque le programme informatique est exécuté par un ordinateur, le procédé selon l'une quelconque des revendications 1 à 7 est mis en œuvre.

19. Puce, dans laquelle la puce comprend un processeur et une interface de données, et le processeur lit, à l'aide de l'interface de données, des instructions stockées dans une mémoire, afin de réaliser le procédé selon l'une quelconque des revendications 1 à 7.
